(19) Europäisches Patentamt

European Patent Office

Office européen des brevets

(11) Veröffentlichungsnummer: **0 470 597 A2**

# (12) EUROPÄISCHE PATENTANMELDUNG

(21) Anmeldenummer: **91113274.4**

(22) Anmeldetag: **07.08.91**

(51) Int. Cl.5: **G02F 1/15**

(30) Priorität: **07.08.90 DE 4025032**

(43) Veröffentlichungstag der Anmeldung:
**12.02.92 Patentblatt 92/07**

(84) Benannte Vertragsstaaten:
**DE FR GB IT NL**

(71) Anmelder: **Max-Planck-Gesellschaft zur Förderung der Wissenschaften e.V.
Bunsenstrasse 10
W-3400 Göttingen(DE)**

(72) Erfinder: **Weppner, Werner, Prof. Dr.
Weinbergweg 20 A
W-7000 Stuttgart 80(DE)**

(74) Vertreter: **Huber, Bernhard, Dipl.-Chem. et al
Patentanwälte H. Weickmann, Dr. K. Fincke
F.A. Weickmann, B. Huber Dr. H. Liska, Dr. J.
Prechtel Kopernikusstrasse 9 Postfach 86 08
20
W-8000 München 86(DE)**

(54) **Elektrochrome Vorrichtung.**

㊄ Eine elektrochrome Vorrichtung, die insbesondere geeignet ist als Fenster, Spiegel oder Darstellungselement (Display), zeigt einen mehrschichtigen Aufbau mit mindestens einer zwischen zwei Schichtelektroden eingeschlossenen Schicht eines entweder ionisch oder gemischt ionisch und elektronisch leitenden Materials, wobei mindestens eine der beiden Elektrodenschichten aus transparentem Material besteht und das ionisch oder ionisch und elektronisch leitende Material zumindest solange transparent ist, wie keine Anregung durch Anlegung von Spannung über die Elektroden erfolgt.

EP 0 470 597 A2

Die Erfindung betrifft eine elektrochrome Vorrichtung, insbesondere geeignet als Fenster, Spiegel oder Darstellungselement (Display), sowie deren Verwendung als Strahlungs- und Wärmeschutzfenster, schattierbarer Spiegel und Displays.

Elektrochrome Schichten in Fenstern dienen der Beeinflussung von Lichtverhältnissen, der farblichen Gestaltung und der Verringerung der Wärmeleitung (Energiekonservierung sowohl bei zu beheizenden als auch zu kühlenden Räumen) von Häusern, Automobilen etc.. Elektrochrome Schichten werden auch in Spiegeln verwandt, wobei von der Absorption des Lichtstrahls vor dem Erreichen der reflektierenden Fläche durch das elektrochrome Element Gebrauch gemacht wird. Darüber hinaus sind elektrochrome Schichten auch als Darstellungselemente (Displays) von Interesse, z.B. in Uhren, auf Anzeigetafeln oder für flache Bildschirme. Die Vorteile solcher elektrochromer Schichten gegenüber Leuchtdioden und Flüssigkristallen liegen vor allem beim geringen Energiebedarf bzw. in der thermischen Stabilität, dem nicht eingeschränkten optischen Winkel und der nicht erforderlichen Planparallelität der Elektroden.

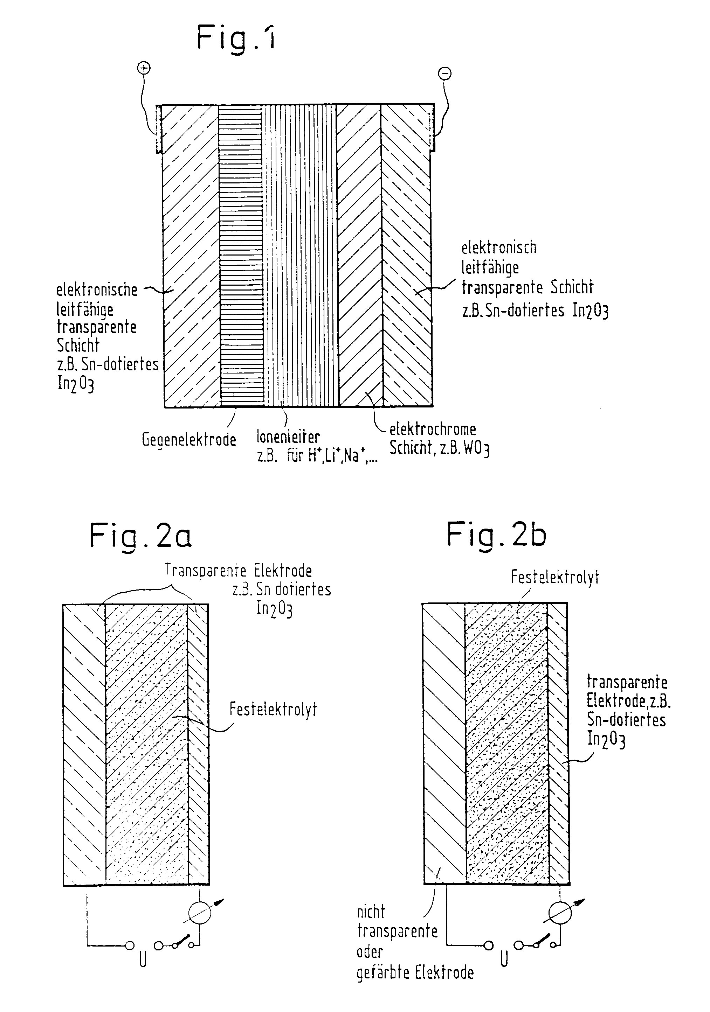

Bisher bekannte elektrochrome Systeme beruhen auf der Herstellung galvanischer Zellen, die aus Anode/Elektrolyt/Kathode und zusätzlich den transparenten Ableitelektroden bestehen. Der Elektrolyt ist hierbei meist flüssig, es wurden jedoch auch Systeme mit festen Elektrolyten beschrieben. Sowohl die Anode als auch die Kathode sind im allgemeinen elektrochrom aktiv, d.h. verfärben sich mit der Aufnahme bzw. Abgabe von Ionen. In den überwiegenden Fällen wird $WO_3$ als Kathode verwendet, das durch eine Einlagerungsreaktion von M = H, Li, Na etc. eine dunkelblaue Bronze $M_xWO_3$ (x ≥ 0,3) bildet (Fig. 1).

Die zur Färbung benötigten elektrochemisch aktiven Ionen werden der Anode (Gegenelektrode) entnommen. Sie ändert dabei ihre Elektronenkonzentration in äquivalenter Weise. Bei elektrochromen Spiegeln spielt die Farbe der Gegenelektrode keine Rolle, da sie sich hinter der reflektierenden Fläche befindet. Bei Fenstern ist es jedoch erforderlich, daß beide Elektroden gleichzeitig optisch transparent sind, und im elektrochromen Zustand mindestens eine der Elektroden verfärbt wird. Für elektronisch leitende und transparente Ableitungen wird gewöhnlich Sn-dotiertes $In_2O_3$) verwendet.

Bei den elektrochromen Systemen des Standes der Technik müssen in jedem Lade- und Entladezustand der galvanischen Zelle mindestens die 5 Phasen (Ableitelektrode/Anode/Elektrolyt/Kathode/Ableitelektrode) miteinander stabil sein. Es genügt im Grunde eine kinetische Stabilität. Wegen der geforderten hohen Beweglichkeit der Ionen besteht jedoch eine große Tendenz, thermodynamisches Gleichgewicht anzunehmen. Die Reaktion muß reversibel sein, und thermodynamische Gleichgewichte sind nach diesen Erwägungen anzustreben.

Die Materialanforderungen sind für den beschriebenen Stand der Technik außerordentlich hoch, weshalb es nicht verwunderlich ist, daß auf dem Markt bisher keine praktisch verwendbaren Systeme erhältlich sind. Am weitesten sind bislang elektrochrome Außenspiegel mit flüssigen Elektrolyten entwickelt, die keine besonderen Anforderungen an die Gegenelektrode stellen. Der flüssige Elektrolyt ist jedoch bei niedrigen Temperaturen nicht mehr hinreichend leitend, um eine Verfärbung in akzeptabler Zeit zu erreichen.

Es war daher Aufgabe der vorliegenden Erfindung, die Schwierigkeiten und Nachteile, die sich im Stand der Technik zeigen, zu beseitigen und praktisch anwendbare elektrochrome Systeme bereitzustellen.

Gelöst wird die Aufgabe erfindungsgemäß durch eine elektrochrome Vorrichtung, insbesondere geeignet als Fenster, Spiegel oder Darstellungselement (Display), welche gekennzeichnet ist durch einen mehrschichtigen Aufbau mit mindestens einer zwischen zwei Schichtelektroden eingeschlossenen Schicht eines entweder ionisch oder gemischt ionisch und elektronisch leitenden Materials, wobei mindestens eine der beiden Elektrodenschichten aus transparentem Material besteht und das ionisch oder ionisch und elektronisch leitende Material zumindest solange transparent ist, wie keine Anregung durch Anlegen von Spannung über die Elektroden erfolgt.

Die erfindungsgemäße Vorrichtung weist einen wesentlich vereinfachten Aufbau gegenüber im Stand der Technik beschriebenen elektrochromen Systemen auf. Statt der drei Phasen der elektrochemischen Zelle (Anode/Elektrolyt/Kathode) wird nur noch eine einzige elektrochrom aktive Phase verwendet, die nur noch direkt mit den Ableitelektroden in Kontakt steht. Damit entfällt das Problem der Stabilität und der Aufbau ist einfacher und kostengünstiger herzustellen. Das Problem der gleichzeitigen Ver- und Entfärbung der Gegenelektrode entfällt. Die einzige elektrochrom aktive Schicht wird entweder nur beginnend von einer Seite verfärbt, oder die Verfärbung bildet sich auf beiden Seiten in einer sich gegenseitig unterstützenden Weise. Es ist hierbei erfindungsgemäß möglich, daß nach dem Anlegen und Abschalten einer Spannung die Verfärbung der ionisch oder ionisch und elektronisch leitenden Schicht noch einige Zeit erhalten bleibt, abhängig vom verwendeten Material. Insbesondere bei Verwendung eines überwiegend ionisch leitenden Materials besteht nach Verfärbung eine Differenz der Aktivität der elektroaktiven Komponente zu beiden Seiten, was sich durch eine Zellspannung äußert. Auch ohne die äußerlich angelegte Spannung bleibt die Verfärbung in diesem Fall erhalten, solange die elektromotorische Kraft (EMK) besteht.

Ein weiterer Vorteil der erfindungsgemäßen Vorrichtung besteht darin, daß die Ionen keine Phasengrenze von der einen zur anderen Phase mehr zu durchqueren brauchen, da ein solcher Vorgang im allgemeinen sehr stark kinetisch behindert ist.

Bevorzugte Ausführungsformen der Erfindung sind in den Unteransprüchen aufgeführt.

Erfindungsgemäß wird der in Fig. 2a dargestellte Aufbau für ein elektrochromes Element sowohl für Transmission als auch für Reflexion verwendet. Die in der Mitte befindliche elektrochrom aktive Schicht aus leitendem Material wird zwischen zwei überwiegend elektronisch leitende Schichtelektroden eingeschlossen. Je nach Anwendungsbedingungen sind beide Elektroden hierbei transparent (z.B. im Falle von Fenster oder gegebenenfalls auch Display, Fig. 2a), oder eine der Schichten ist permanent reflektierend oder gefärbt (Spiegel oder gegebenenfalls Darstellungselemente, Bildschirme, Figur 2b).

Das transparente Elektrodenmaterial ist in der erfindungsgemäßen Vorrichtung beispielsweise $Sn_2O_3$-dotiertes $In_2O_3$.

Bei Reflexion (Spiegel, Darstellungselemente, Bildschirme) ergeben sich wegen der überwiegend elektronischen Leitfähigkeit optisch spiegelnder oder verfärbter Materialien nahezu unbegrenzte Möglichkeiten zur Auswahl geeigneter Elektroden.

Die spiegelnde Ebene bzw. die Verfärbung ist im entfärbten Zustand der elektrochromen Schicht aus leitendem Material sichtbar. Durch Verfärbung (Abdunkeln) der mittleren, leitenden Schicht kann die Farbe der hinteren Elektrode dann abgedunkelt bzw. vollständig abgedeckt werden.

Bei dem leitenden Material der elektrochromen Schicht kann es sich um entweder ionisch leitendes Material oder um gemischt ionisch und elektronisch leitendes Material handeln. Beispiel für rein ionisch leitende Materialien sind $ZrO_2$ ($+Y_2O_3$), für gemischt elektronisch und ionisch leitende Materialien $TiO_2$ ($+Fe$). In der Patentanmeldung DE-A 35 03 264 wurde dargestellt, daß durch das Anlegen von Spannungen an gemischte (sowohl ionisch als auch überwiegend elektronisch) leitende Festkörper, deren Zusammensetzung lokal geändert werden kann. Das führt dazu, daß sich im Inneren des Materials pn-Übergänge einstellen oder Sauerstoffatome aus- oder eingebaut werden.

Durch die lokale Variation der Stöchiometrie des überwiegend elektronischen Leiters kann auch die Farbe geändert werden. Ausgehend von einem ursprünglich homogenen und transparenten Material wird durch Anlegen der Spannung auf der Seite der negativen Polarität der angelegten Spannung die Überschußelektronen-Konzentration heraufgesetzt (bzw. die Defektelektronen-Konzentration herabgesetzt). Auf der Seite der positiven Polarität wird umgekehrt durch die Spannung die Defektelektronen-Konzentration heraufgesetzt bzw. die Überschußelektronen-Konzentration herabgesetzt. Befindet sich das Material im ursprünglich entfärbten Zustand, d.h. am oder nahe dem intrinsischen Punkt mit relativ geringer Überschuß- und Defektelektronen-Konzentration, so wird durch die angelegte Spannung auf beiden Seiten die Zahl der das Licht absorbierenden (freien) elektronischen Leitungsträger heraufgesetzt (sowohl Überschußals auch Defektelektronen sind für die Absorption von Licht verantwortlich). Die Schicht färbt sich dunkel. Die Zahl der im optischen Weg befindlichen elektronischen Ladungsträger hat sich durch die angelegte Spannung erhöht. Durch das Abschalten der Spannung diffundieren die mit lokal unterschiedlichen Konzentrationen vorliegenden Überschuß- und Defektelektronen wieder ineinander. Sie vernichten sich dabei und es wird der ursprünglich entfärbte Zustand mit geringer integraler Gesamtelektronenkonzentration wieder hergestellt. Der Vorgang ist reversibel und läßt sich beliebig wiederholen.

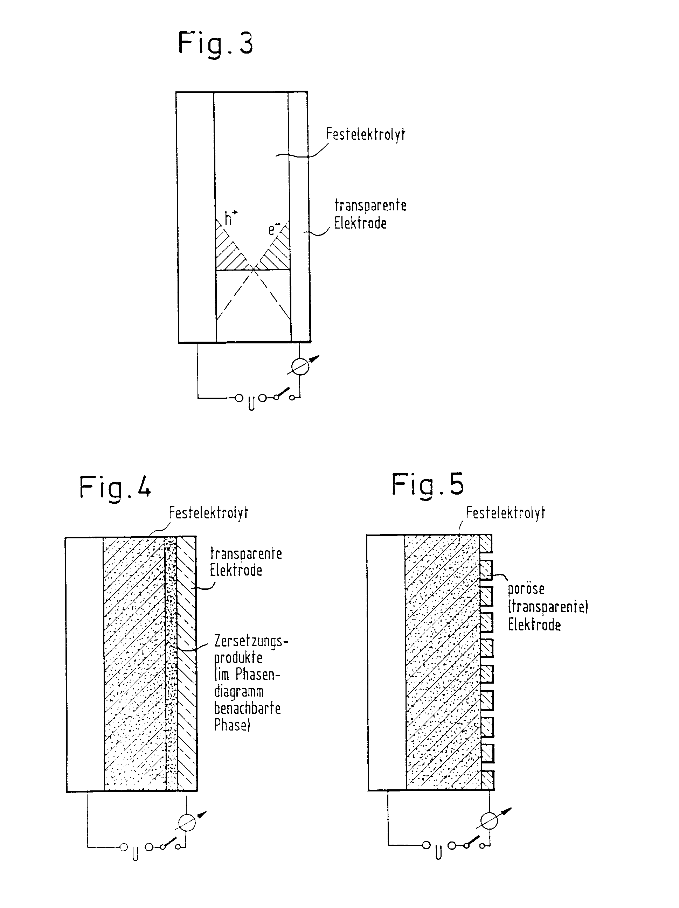

Die elektrochrom aktive Schicht liegt in jedem Zustand in der gleichen Phase (d.h. mit der gleichen Kristallstruktur) vor. Lediglich die Stöchiometrie und damit die elektronische Struktur ändern sich. Dies ist in Fig. 3 dargestellt, wo der durchgezogene Strich die Konzentrationsverteilung der Überschuß- und Defektelektronen ohne angelegte Spannung U (die Werte sind hier gleich angenommen, können aber auch - etwas - verschieden sein) zeigt. Die gestrichelten Linien zeigen die Konzentrationsverteilung mit angelegter Spannung für Überschußelektronen $e^-$ und Defektelektronen $h^+$, der schraffierte Bereich kennzeichnet den Konzentrationsgewinn der elektronischen Ladungsträger durch angelegte Spannung U.

Die lokale Änderung der Zusammensetzung kann aber auch eine Zersetzung der Schicht sowohl auf einer als auch auf beiden Seiten beinhalten (Fig. 4). Dadurch ergeben sich ebenfalls farbliche Änderungen (indem eine andere Verbindung mit anderer Farbe gebildet wird).

Diese durch elektrochemische Zersetzung gebildeten Phasen sind dem Phasendiagramm nach Nachbarphasen, die thermodynamisch mit der Ausgangsschicht stabil sind. Zumindest sind diese Phasen jedoch kinetisch stabil. Stabilitätsprobleme wie bei Systemen im Stand der Technik ergeben sich dadurch nicht. Durch Abschalten der Spannung werden die Nachbarphasen wieder zurückgebildet und die Anordnung geht wieder in den ursprünglich homogenen Zustand mit einer einzigen Phase zurück.

In einer bevorzugten Ausführungsform der Erfindung besteht die Schicht aus leitfähigem Material aus $WO_3$, aus mit 0,1 bis 2 % Eisen dotiertem $TiO_2$ (Rutil) oder aus $ZrO_2$ mit einem Zusatz von $Y_2O_3$. Weitere Beispiele für bevorzugte Materialien der ionisch oder ionisch und elektronisch leitenden Schicht sind $Li_{2,3}Ti_{3,4}O_8$, $LiAl_5O_8$, $Li_5AlO_4$, $LiMnO_2$, $LiMnO_3$, $LiCoO_2$, $LiNiO_2$, $LiFeO_2$, $NaNiO_2$ und $NaCoO_2$.

In einer weiteren bevorzugten Ausführungsform der Erfindung ist eine der Elektroden, und zwar die transparente Elektrode, porös oder durchbrochen ausgeführt.

Bisher wurde das elektrochrome Material als durch die beiden Ableitelektroden abgeschlossen betrachtet. Die mittlere elektrochrom aktive, leitende Schicht kann aber auch einen Austausch mit der Umgebung (z.B. mit der umgebenden Luft) zulassen. Wird daher eine der Elektroden in poröser Form gestaltet (Fig. 5), so wird durch das Anlegen der Spannung die Konzentration einer mit der Umgebung in Austausch stehenden Komponente herab- oder heraufgesetzt. Es erfolgt eine Zu- oder Abnahme dieser Komponente in der Schicht aus der Umgebung heraus. Mit dem Ein- oder Ausbau ändert sich aus Gründen der Elektroneutralität die Konzentration der das Licht absorbierenden elektronischen oder ionischen Ladungsträger. Es erfolgt eine Verfärbung (oder eventuell auch Entfärbung), die durch Abschalten der Spannung wieder rückgängig gemacht werden kann. Erfindungsgemäß kann auch die bisher beschriebene Anordnung mit einer nach dem eingangs dargestellten Stand der Technik hergestellten Elektrode zusätzlich zu der mittleren Schicht verwendet werden. Durch das Anlegen der Spannung ergibt sich in diesem Fall ebenfalls eine lokale Änderung der Stöchiometrie des gemischten Leiters, wobei diese aber durch das Gleichgewicht mit der Elektrode auf dieser Seite festgelegt sein kann. Durch die lokale Änderung der Zusammensetzung ändert sich die über den optischen Weg integrale Konzentration der elektronischen Ladungsträger und damit die Farbe der Anordnung.

Erfindungsgemäß ist sowohl die Verwendung von gemischten, nämlich ionisch und elektronisch leitenden Materialien als auch von überwiegend Ionen leitenden Materialien möglich. Die überwiegend elektronische Leitung der aktiven mittleren Schicht bei Verwendung eines gemischten Leiters benötigt zur Aufrechterhaltung der Spannung, d.h. der Verfärbung, einen Stromfluß und damit einen nicht unerheblichen Energieverbrauch. Bei Verwendung eines Ionenleiters wird durch die angelegte Spannung entsprechend dem Nerst'schen Gesetz eine Differenz des chemischen Potentials der neutralen elektrochrom-aktiven Komponente vorgegeben. Eine lediglich aus einer einzelnen Phase, nämlich dem Ionenleiter und den beiden elektronischen Ableitungen bestehende elektrochrome Vorrichtung erfährt durch die angelegte Spannung auf einer Seite eine Reduktion und auf der anderen Seite eine Oxidation. Auf der einen Seite wird die Überschußelektronen-Konzentration erhöht (bzw. die Defektelektronen-Konzentration erniedrigt) und auf der anderen Seite wird die Defektelektronen-Konzentration erhöht (bzw. die Überschußelektronen-Konzentration erniedrigt). Liegt der Ionenleiter im Ausgangsstadium, etwa am stöchiometrischen Punkt (gleiche Überschuß- wie Defektelektronen-Konzentration, bzw. Minimum der Gesamtelektronen-Konzentration) vor, so ergibt sich durch die Spannung beidseitig eine Erhöhung der Konzentration der elektronischen Ladungsträger und es tritt eine Verfärbung des Ionenleiters ein. Die Einstellzeit für das Gleichgewicht hängt von dem Diffusions-Koeffizienten der Elektronen ab, die als zweitschnellste Ladungsträger den Vorgang der Änderung der lokalen Zusammensetzung kontrollieren. Vorteilhaft gegenüber bisherigen elektrochromen Vorrichtungen ist, daß die Ionen keine Phasengrenze mehr überwinden müssen. Es gelten der Reihe nach die gleichen Variationsmöglichkeiten, wie sie bereits oben für gemischte Leiter beschrieben wurden. Auch die Elektroden-Materialien können, wie bereits für die gemischten Leiter beschrieben, verwendet werden.

Auch der Ionenleiter kann Komponenten mit der Umgebung austauschen. Beispielsweise kann der Festelektrolyt $ZrO_2(+10$ Mol-% $Y_2O_3)$ durch eine poröse Elektrode mit der Umgebung Sauerstoff austauschen. Die Umgebung fixiert dadurch den Gleichgewichts-Sauerstoff-Partialdruck auf diese Elektrodenseite. Die angelegte Spannung legt dann eine darauf bezogene Differenz des chemischen Potentials des Sauerstoffs zwischen beiden Elektroden fest. Es entsteht eine Stöchiometrie-Änderung mit einer Änderung der Elektronen-Konzentration, die zur Verfärbung führt. Ein Vorteil der Verwendung von Ionenleitern gegenüber gemischten Leitern als elektrochrom aktives Material in der erfindungsgemäßen elektrochromen Vorrichtung ist der geringe Energieverbrauch zur Aufrechterhaltung der Verfärbung. Da die Elektroden für Ionen blockierend sind, fließt im Falle eines Ionenleiters stationär nur ein sehr geringer Reststrom der elektronischen Minoritätsladungsträger, der vernachlässigbar gering ist im Vergleich zur Anwendung gemischter Leiter. Für die Schalt- oder Ansprechzeiten sind jeweils die Diffusitäten der Minoritätsladungsträger maßgebend. Das sind die Ionen im Falle gemischter Leiter und die Elektronen im Falle überwiegend ionischer Leiter. Die Werte sind häufig von ähnlicher Größenordnung. Es gibt jedoch zahlreiche gemischte Leiter, die eine außerordentlich schnelle, mit Flüssigkeiten oder sogar Gasen vergleichbare lokale Änderung der Stöchiometrie aufweisen (siehe EP-A 81 100 739.2).

Bei Verwendung der erfindungsgemäßen elektrochromen Vorrichtung legt man gewöhnlich gegenüber Polarisationserscheinungen bereinigte Spannungen zwischen einigen mV und 4V an.

Die erfindungsgemäße elektrochrome Vorrichtung ermöglicht es mit einem einfach herstellbaren Aufbau schattierbare Fenster, Spiegel oder Darstellungselemente wie Displays etc. herzustellen, die im Verhältnis zu bisher bekannten Systemen vorteilhaft sind, wobei sowohl ein niedriger Stromverbrauch, insbesondere für Vorrichtungen unter Verwendung eines Ionenleiters, als auch die Materialanforderungen hierfür derart sind, daß die Systeme tatsächlich praktisch anwendbar sind.

Ein weiterer Gegenstand der Erfindung ist daher die Verwendung einer erfindungsgemäßen elektrochromen Vorrichtung als Strahlungs- oder/und Wärmeschutzfenster oder Darstellungselement (Display), bei der man an eine Vorrichtung, deren beide Elektroden transparent sind, eine elektrische Spannung anlegt und dadurch eine Verfärbung der Schicht aus ionisch oder ionisch und elektronisch leitendem Material bewirkt. Ebenfalls Gegenstand der Erfindung ist die Verwendung einer elektrochromen Vorrichtung, deren eine, nämlich auf der vom Betrachter abgewandten Seite der Vorrichtung liegende Elektrode aus spiegelndem Material ausgeführt ist, als schattierrer Spiegel, wobei man durch Anlegen einer Spannng an die Elektroden eine Verfärbung der Schicht des ionisch oder ionisch und elektronisch leitenden Materials bewirkt. Wiederum ein weiterer Gegenstand der Erfindung ist die Verwendung einer erfindungsgemäßen Vorrichtung, bei der die auf der vom Betrachter abgewandten Seite der Vorrichtung liegende Elektrode aus gefärbtem undurchsichtigen Material besteht, als Darstellungselement oder Display, wobei man durch Anlegen einer Spannung wiederum eine Verfärbung der Schicht aus leitendem Material und damit eine Abdeckung der Elektrodenfärbung bewirkt.

Die folgenden Beispiele sollen in Verbindung mit den Abbildungen die Erfindung weiter erläutern.

Fig. 1 zeigt hierbei eine elektrochrome Vorrichtung nach dem Stand der Technik;

Fig. 2A zeigt den Aufbau einer erfindungsgemäßen Vorrichtung bei Verwendung als schattierbares Fenster;

Fig. 2B zeigt eine solche Vorrichtung, ausgebildet als schattierbaren Spiegel oder als Darstellungselement;

Fig. 3 zeigt schematisch die Konzentrations-Verteilung für Überschuß- und Defektelektronen mit oder ohne eine angelegte Spannung;

Fig. 4 zeigt eine Vorrichtung, deren elektrochromes Material Zersetzungsprodukte im Grenzgebiet mit der benachbarten Phase bildet; und

Fig. 5 zeigt eine bevorzugte Ausführungsform der Erfindung, bei der die eine, nämlich die transparente Elektrode porös ausgebildet ist.

**Beispiel 1**

Es wird eine Vorrichtung hergestellt, deren Aufbau der Fig. 2A oder 2B entspricht. Die transparenten Elektroden bestehen aus Sn-dotiertem $In_2O_3$. Als elektrochromes Material (gemischter Leiter) wird $TiO_2$ (Rutil) verwendet, das mit 0,1 bis 2 % Eisen dotiert ist. Dieses Material weist bei einem Sauerstoff-Partialdruck von etwa $10^{-4}$ atm einen stöchiometrischen Punkt auf (an dem das Material ein elektronisches Minimum hat und transparent ist). Durch Anlegen einer Spannung von 1 V an diese Schicht, die mit Sauerstoff-Partialdruck ins Gleichgewicht gebracht worden war, wird eine Seite oxidiert und die andere reduziert. Die Farbe der Schicht ändert sich von blau nach farblos. Abschalten der Spannung bringt die Farbänderung wieder zum verschwinden.

**Beispiel 2**

Der Aufbau der elektrochromen Vorrichtung entspricht dem in Figur 5 gezeigten, wobei eine Ionenleiter-Komponente als elektrochrom-aktive Schicht verwendet wird. Hierzu wird als Festelektrolyt $ZrO_2$ (+ 10 Mol-% $Y_2O_3$) verwendet, der durch die poröse Elektrode mit der Umgebung Sauerstoff austauschen kann. Die Umgebung fixiert dadurch den Gleichgewichts-Sauerstoff-Partialdruck auf dieser Elektrodenseite. Die angelegte Spannung legt dann eine darauf bezogene Differenz des chemischen Potentials des Sauerstoffs zwischen beiden Elektroden fest. Bei Anlegen einer Spannung oberhalb etwa 1 V wird, ausgehend von der nicht porösen Elektrodenseite, eine Schwärzung bewirkt. Auch unter blockierenden Bedingungen auf beiden Seite, d.h. wenn kein Kontakt mit einer Gasphase vorliegt, zeigt sich die Schwärzung durch Anlegen der Spannung. Bei Abschalten der Spannung wird das elektrochrom-aktive Material wieder transparent.

**Patentansprüche**

1. Elektrochrome Vorrichtung, insbesondere geeignet als Fenster, Spiegel oder Darstellungselement (Display),
**gekennzeichnet durch**
einen mehrschichtigen Aufbau mit mindestens einer zwischen zwei Schichtelektroden eingeschlossenen Schicht eines entweder ionisch oder gemischt ionisch und elektronisch leitenden Materials, wobei mindestens eine der beiden Elektrodenschichten aus transparentem Material besteht und das ionisch oder ionisch und elektronisch leitende Material zumindest solange transparent ist, wie keine Anregung durch Anlegung von Spannung über die Elektroden erfolgt.

2. Elektrochrome Vorrichtung nach Anspruch 1,
**dadurch gekennzeichnet,**
daß das leitfähige Material mit 0,1 bis 2 % Eisen dotiertes $TiO_2$ (Rutil), $ZrO_2$ mit einem Zusatz von $Y_2O_3$, $Li_{2,3}Ti_{3,4}O_8$, $LiAl_5O_8$, $Li_5AlO_4$, $LiMnO_2$, $Li_2MnO_3$, $LiCoO_2$, $LiNiO_2$, $LiFeO_2$, $NaNiO_2$, $NaCoO_2$ ist.

3. Elektrochrome Vorrichtung nach Anspruch 1 oder 2,
**dadurch gekennzeichnet,**
daß eine transparente Elektrode porös oder durchbrochen ausgeführt ist.

4. Elektrochrome Vorrichtung nach einem der vorhergehenden Ansprüche, ausgeführt als Spiegel,
**dadurch gekennzeichnet,**
daß die auf der vom Betrachter abgewandten Seite der Vorrichtung liegende Elektrode aus spiegelndem Material besteht.

5. Elektrochrome Vorrichtung nach einem der vorhergehenden Ansprüche, ausgeführt als Display,
**dadurch gekennzeichnet,**
daß die auf der vom Betrachter abgewandten Seite der Vorrichtung liegende Elektrode aus gefärbtem undurchsichtigem Material besteht.

6. Verwendung einer elektrochromen Vorrichtung nach einem der Ansprüche 1 bis 3 als Strahlungs- oder/und Wärmeschutz-Fenster oder Darstellungselement (Display),
**dadurch gekennzeichnet,**
daß man an eine Vorrichtung, deren beider Elektroden transparent sind, eine elektrische Spannung anlegt und dadurch eine Verfärbung der Schicht aus ionisch oder ionisch und elektronisch leitendem Material bewirkt.

7. Verwendung einer elektrochromen Vorrichtung nach Anspruch 4 als schattierbarer Spiegel,
**dadurch gekennzeichnet,**
daß man durch Anlegen einer Spannung an die Elektroden eine Verfärbung der Schicht des ionisch oder ionisch und elektronisch leitenden Materials bewirkt.

8. Verwendung einer elektrochromen Vorrichtung nach Anspruch 5 als Darstellungselement (Display),
**dadurch gekennzeichnet,**
daß man durch Anlegen einer Spannung eine Verfärbung der Schicht aus leitendem Material und damit eine Abdeckung der Elektrodenfärbung bewirkt.

## Fig. 1

$\oplus$  $\ominus$

elektronische leitfähige transparente Schicht z.B. Sn-dotiertes In$_2$O$_3$

elektronisch leitfähige transparente Schicht z.B. Sn-dotiertes In$_2$O$_3$

Gegenelektrode

Ionenleiter z.B. für H$^+$, Li$^+$, Na$^+$, ...

elektrochrome Schicht, z.B. WO$_3$

## Fig. 2a

Transparente Elektrode z.B. Sn dotiertes In$_2$O$_3$

Festelektrolyt

U

## Fig. 2b

Festelektrolyt

transparente Elektrode, z.B. Sn-dotiertes In$_2$O$_3$

nicht transparente oder gefärbte Elektrode

U

## Fig.3

Festelektrolyt

transparente
Elektrode

$h^+$  $e^-$

U

## Fig.4

Festelektrolyt

transparente
Elektrode

Zersetzungsprodukte
(im Phasendiagramm
benachbarte
Phase)

U

## Fig.5

Festelektrolyt

poröse
(transparente)
Elektrode

U